# EUROPÄISCHE PATENTANMELDUNG

(11) **EP 1 120 044 A1**
(43) Veröffentlichungstag der Anmeldung: **01.08.2001**
(21) Anmeldenummer: 00101571.8
(22) Anmeldetag: 27.01.2000
(51) Int. Cl.: A23G 3/00

(54) **Gummibonbon mit Aromastoffzonen**

(71) Anmelder: Katjes Fassin GmbH + Co. KG, 46446 Emmerich (DE)
(72) Erfinder: Fassin, Klaus, 46446 Emmerich (DE)
(74) Vertreter: Albrecht, Rainer Harald, Dr.-Ing.

(57) **Zusammenfassung**

Verfahren zur Herstellung von Gummibonbons, wobei in die Gummimasse des Gummibonbons aromastoffhaltige Teilchen mit der Maßgabe eingebracht werden, dass die aromastoffhaltigen Teilchen in dem fertigen Gummibonbon verteilte separate Aromastoffzonen bilden.

## Beschreibung

Die Erfindung betrifft ein Verfahren zur Herstellung von Gummibonbons. Die Erfindung betrifft fernerhin ein Gummibonbon. - Gummibonbon meint im Rahmen der Erfindung ein Bonbon aus Fruchtgummi und/oder aus Lakritz und/oder aus Schaumzucker.

Aus der Praxis ist es insbesondere bekannt, Fruchtgummibonbons mittels der sogenannten Gießtechnik oder Mogultechnik herzustellen. Dabei wird zunächst aus in Wasser aufgelöster Gelatine und in Wasser aufgelösten Zuckerkomponenten eine Basismasse hergestellt. Dieser Basismasse werden weitere Komponenten, beispielsweise Farbkomponenten zugegeben. Um dem bekannten Gummibonbon eine bestimmte Geschmacksrichtung zu verleihen werden in die dünnflüssige bis zähflüssige Gummimasse flüssige Aromastoffe eingemischt, die in der Gummimasse homogen verteilt werden. Anschließend wird die dünnflüssige bis zähflüssige Gummimasse in Formen aus Stärke gegossen und nach dem Abkühlen bzw. Erstarren ausgeformt. Die dinggemäß hergestellten Gummibonbons weisen ein homogenes Geschmacksprofil auf, d. h., dass der Verbraucher beim Verzehr des Gummibonbons stets eine gleichbleibende Geschmacksrichtung wahrnimmt bzw. schmeckt. Das bekannte Verfahren hat sich bewährt und die auf diese Weise hergestellten Gummibonbons genügen in geschmacklicher Hinsicht den Anforderungen. Nichtsdestoweniger ist das Verfahren zur Herstellung von Gummibonbons verbesserungsfähig und sind auch die geschmacklichen Eigenschaften der Gummibonbons verbesserungsfähig. Die mit den bekannten Maßnahmen hergestellten Gummibonbons weisen im Übrigen manchmal den Nachteil auf, dass nach längerer Lagerung die Geschmacksintensität allmählich abgebaut wird.

Demgegenüber liegt der Erfindung das technische Problem zugrunde, ein Verfahren der eingangs genannten Art anzugeben, mit welchem auf einfache, wenig aufwendige und kostengünstige Weise Gummibonbons hergestellt werden können, die sich durch einen hervorragenden Geschmack auszeichnen und bei denen der Geschmack auch langfristig voll erhalten bleibt. Der Erfindung liegt weiterhin das technische Problem zugrunde, ein Gummibonbon anzugeben, welches die genannten vorteilhaften Eigenschaften aufweist.

Zur Lösung des vorgenannten technischen Problems lehrt die Erfindung zunächst ein Verfahren zur Herstellung von Gummibonbons, wobei in die Gummimasse des Gummibonbons aromastoffhaltige Teilchen mit der Maßgabe eingebracht werden, dass die aromastoffhaltigen Teilchen in dem fertigen Gummibonbon verteilte separate Aromastoffzonen bilden. - Separate Aromastoffzone meint einen separaten Bereich innerhalb der Gummimasse bzw. Gummimatrix, in dem die Konzentration an zumindest einem Aromastoff höher oder wesentlich höher ist als in den benachbarten Bereichen der Gummimasse bzw. Gummimatrix. Vorzugsweise ist die Konzentration an dem zumindest einen Aromastoff in den der Aromastoffzone benachbarten Bereichen der Gummimasse bzw. Gummimatrix gleich Null oder quasi gleich Null. Ein mit dem erfindungsgemäßen Verfahren hergestelltes Gummibonbon weist somit einen heterogenen Aufbau auf und enthält in der Gummimatrix gleichsam eine Mehrzahl von separaten Aromainseln. Es liegt im Rahmen der Erfindung, dass die aromastoffhaltigen Teilchen in dem fertigen Gummibonbon in ungelöster Form verteilt vorliegen. Zweckmäßigerweise werden gemäß dieser letztgenannten Ausführungsform die aromastoffhaltigen Teilchen als Feststoffteilchen in die Gummimasse eingebracht und werden die separaten Aromastoffzonen vorzugsweise jeweils von zumindest einem dieser Feststoffteilchen gebildet. Bevorzugt sind die Feststoffteilchen so ausgebildet, dass der Verbraucher beim Verzehr der erfindungsgemäßen Gummibonbons ein festes oder hartes Teilchen nicht wahrnimmt. Mit anderen Worten löst sich ein festes aromastoffhaltiges Teilchen beim Kontakt mit der Zunge vorzugsweise sofort auf. - Es liegt weiterhin im Rahmen der Erfindung, pastenförmige aromastoffhaltige Teilchen in die Gummimasse einzubringen. Zweckmäßigerweise werden gemäß dieser letztgenannten Ausführungsform die separaten Aromastoffzonen durch kleine pastenförmige Bereiche gebildet.

Nach bevorzugter Ausführungsform der Erfindung werden in die Gummimasse des Gummibonbons zwei bis zehn, vorzugsweise zwei bis fünf aromastoffhaltige Teilchen eingebracht. Es liegt im Rahmen der Erfindung, dass das fertige Gummibonbon zwei bis zehn, vorzugsweise zwei bis fünf separate Aromastoffzonen enthält, die in dem Gummibonbon verteilt vorliegen. Grundsätzlich können in die Gummimasse des Gummibonbons auch mehr als zehn aromastoffhaltige Teilchen eingebracht werden und kann das Gummibonbon mehr als zehn separate Aromastoffzonen enthalten. - Nach sehr bevorzugter Ausführungsform der Erfindung fällt auf je 0,5 bis 2 Gramm, vorzugsweise auf je 0,7 bis 1,3 Gramm des fertigen Gummibonbons eine Aromastoffzone und zweckmäßigerweise ein aromastoffhaltiges Teilchen. So können auf ein Gummibonbon mit einem Stückgewicht von 4 Gramm drei bis vier Aromastoffzonen und vorzugsweise drei bis vier aromastoffhaltige Teilchen entfallen. - Fertiges Gummibonbon meint im Rahmen der Erfindung im Übrigen das abgekühlte, erstarrte und aus der Gießform ausgeformte Gummibonbon.

Nach bevorzugter Ausführungsform des erfindungsgemäßen Verfahrens wird zur Herstellung der Gummimasse zumindest ein Geliermittel, zumindest ein Süßungsmittel sowie Wasser eingesetzt. Vorzugsweise wird das zumindest eine Geliermittel zunächst in Wasser aufgelöst und wird das zumindest eine Süßungsmittel in Wasser aufgelöst. Zweckmäßigerweise wird die Lösung des zumindest einen Süßungsmittels bei Temperaturen über 100° C gekocht. Die beiden wässrigen Lösungen werden dann vorzugsweise zur Basismasse zusammengemischt. Es liegt im Rahmen der Erfindung, dass der Basismasse zumindest eine Säure, vorzugsweise Zitronensäure, zugegeben wird. Zweckmäßigerweise wird der Basismasse eine wässrige Säurelösung, bevorzugt eine wässrige Zitronensäurelösung beigemischt. Fernerhin wird der Basismasse vorzugsweise zumindest eine Farbkomponente zugegeben. Bei der Farbkomponente kann es sich um Frucht und/oder Frucht-/Pflanzenauszüge und/oder um zumindest einen Farbstoff handeln. Grundsätzlich liegt es auch im Rahmen des erfindungsgemäßen Verfahrens, dass der entstehenden zähflüssigen Gummimasse abgesehen von den weiter unten noch näher erläuterten aromastoffhaltigen Teilchen auch zumindest ein flüssiger Aromastoff zugegeben wird.

Nach bevorzugter Ausführungsform der Erfindung wird die Gummimasse in zähflüssiger Form in Gießformen gegossen und nach dem Erstarren ausgeformt. Es liegt somit im Rahmen der Erfindung, dass die Verfahrensparameter so eingestellt werden, dass eine zähflüssige Gummimasse bzw. eine Gummimasse in Form einer viskosen Flüssigkeit erhalten wird. - Nach sehr bevorzugter Ausführungsform der Erfindung werden die aromastoffhaltigen Teilchen vor dem Gießen zu der zähflüssigen Gummimasse gegeben. Es liegt somit im Rahmen der Erfindung, dass die erfindungsgemäßen aromastoffhaltigen Teilchen erst nach Zugabe der anderen Komponenten (Säurekomponenten, Farbkomponenten und dergleichen) zu der Basismasse und somit unmittelbar vor dem Gießen zugefügt werden. Nach der Zugabe der aromastoffhaltigen Teilchen und vor dem Gießen in die Gießformen wird die zähflüssige Gummimasse zweckmäßigerweise gerührt. Auf diese Weise wird eine gleichmäßige Verteilung der aromastoffhaltigen Teilchen in der Gummimasse gewährleistet. Es liegt im Rahmen der Erfindung, dass die zähflüssige Gummimasse warm in die Gießformen gefüllt wird und nach dem Abkühlen die erstarrten Gummikörper bzw. die fertigen Gummibonbons ausgeformt werden können. Bei der vorstehend beschriebenen Technik handelt es sich um die bewährte Gießtechnik bzw. Mogultechnik zur Herstellung von Gummibonbons. Es liegt jedoch auch im Rahmen der Erfindung, dass die aromastoffhaltigen Teilchen in Gummibonbons eingebracht werden, die beispielsweise mit Hilfe der Extrusionstechnik hergestellt werden.

Nach sehr bevorzugter Ausführungsform der Erfindung werden aromastoffhaltige Teilchen aus zumindest einer Trägersubstanz eingesetzt, in welche Trägersubstanz zumindest ein Aromastoff eingekapselt wird. Vorzugsweise ist in der Trägersubstanz nur ein einziger Aromastoff eingekapselt. Prinzipiell bestehen im Rahmen der Erfindung verschiedene Möglichkeiten zur Einkapselung des Aromastoffes in der Trägersubstanz. Nach sehr bevorzugter Ausführungsform der Erfindung sind eine Mehrzahl oder eine Vielzahl von Aromastoffpartikel, beispielsweise feine Aromastofftröpfchen, in einer Matrix aus der Trägersubstanz enthalten bzw. eingeschlossen. Zweckmäßigerweise liegen die Aromastoffpartikel in der Matrix der Trägersubstanz homogen verteilt vor. Vorzugsweise handelt es sich bei den aromastoffhaltigen Teilchen um Granulatteilchen. Der Aromastoff wird nach dieser Ausführungsform in getrockneter granulierter Form in die Gummimatrix eingebracht. - Grundsätzlich ist es jedoch auch möglich, eine sogenannte Mikroverkapselung des Aromastoffes zu verwirklichen. Nach dieser Ausführungsform wird ein Kern aus einem Aromastoff, beispielsweise einem flüssigen Aromastoff, von einer durch die Trägersubstanz gebildeten Hülle, beispielsweise von einer Gelatinehülle, umgeben. Dabei kann der Aromastoff auch von mehreren Schichten der Trägersubstanz umgeben werden, so dass sich insgesamt ein zwiebelartiger Aufbau des Teilchens ergibt.

Nach sehr bevorzugter Ausführungsform der Erfindung. handelt es sich bei den aromastoffhaltigen Teilchen um feste aromastoffhaltige Teilchen. Grundsätzlich liegt es aber auch im Rahmen der Erfindung, dass pastenförmige bzw. hochviskose aromastoffhaltige Teilchen eingesetzt werden, die in der Gummimatrix verteilt vorliegen. - Das erfindungsgemäße Verfahren wird so geführt, dass ein Auflösen der aromastoffhaltigen Teilchen, vorzugsweise der aromastoffhaltigen Granulatteilchen, in der zähflüssigen Gummimasse bzw. in der Gummimatrix vermieden wird, so dass sich letztendlich die separaten Aromastoffzonen in dem Gummibonbon ergeben. Fernerhin wird zweckmäßigerweise vermieden, dass die aromastoffhaltigen Teilchen, vorzugsweise die aromastoffhaltigen Granulatteilchen auf der zähflüssigen Gummimasse aufschwimmen oder sich in der zähflüssigen Gummimasse absetzen. Vielmehr liegt es im Rahmen der Erfindung, dass die aromastoffhaltigen Teilchen in der Gummimasse bzw. Gummimatrix verteilt werden und bevorzugt möglichst gleichmäßig verteilt werden. Dementsprechend werden die Parameter des erfindungsgemäßen Verfahrens, insbesondere die Temperatur, die Viskosität und die mechanische Belastung der Gummimasse eingestellt. Zweckmäßigerweise werden die Verfahrensparameter vor allem so eingestellt, dass die Gummimasse beim Gießen in die Gießformen zähflüssig ist bzw. eine hohe Viskosität aufweist. Die dynamische Viskosität der Gummimasse ist dabei zweckmäßigerweise höher als 1500 mPa • s, vorzugsweise höher als 1600 mPa • s. Die vorstehenden Werte der dynamischen Viskosität beziehen sich auf eine Messtemperatur von 50° C. - Aromastoff meint im Rahmen der Erfindung insbesondere natürliche Aromastoffe und/oder naturidentische Aromastoffe und/oder Aromaextrakte.

Nach sehr bevorzugter Ausführungsform der Erfindung wird mit aromastoffhaltigen Teilchen gearbeitet, die einen Durchmesser zwischen 0,4 und 4 mm, vorzugsweise zwischen 0,4 und 3 mm, sehr bevorzugt zwischen 0,4 und 2,5 mm aufweisen. Zweckmäßigerweise weisen auch die in dem fertigen Gummibonbon vorhandenen Aromazonen einen Durchmesser zwischen 0,4 und 4 mm, vorzugsweise zwischen 0,4 und 3 mm, sehr bevorzugt zwischen 0,4 und 2,5 mm auf. Es liegt im Rahmen der Erfindung, dass die Größe bzw. der Durchmesser der Aromastoffzonen so eingerichtet wird, dass die Aromastoffzonen in einem ungefärbten transparenten Gummibonbon mit bloßem Auge sichtbar sind bzw. sichtbar wären. Ganz besonders bevorzugt sind aromastoffhaltige Teilchen, die einen Durchmesser von 0,5 bis 2 mm aufweisen. Diese aromastoffhaltigen Teilchen haben sich bezüglich der Einarbeitung in die Gummimasse und auch im Hinblick auf den Geschmack der hergestellten Gummibonbons besonders bewährt. Ganz bevorzugt sind auch Aromastoffzonen, die einen Durchmesser von 0,5 bis 2 mm aufweisen. Bei den vorstehenden Durchmesserangaben handelt es sich zweckmäßigerweise um die größte Ausdehnung der aromastoffhaltigen Teilchen bzw. der Aromastoffzonen, falls die aromastoffhaltigen Teilchen bzw. Aromastoffzonen keine kugelartige Form aufweisen.

Eine bevorzugte Ausführungsform der Erfindung ist dadurch gekennzeichnet, dass mit zumindest einer Trägersubstanz aus der Gruppe "Maltodextrin, Gummiarabicum, Gelatine, modifizierte Stärke, modifiziertes Molkenprotein" gearbeitet wird. Als Trägersubstanz werden bevorzugt Maltodextrin und/oder Gummiarabicum eingesetzt. Sehr bevorzugt wird eine Mischung aus Maltodextrin und Gummiarabicum als Trägersubstanz verwendet.

Nach einer Ausführungsform der Erfindung werden 0,1 bis 2,5 Gew.-%, vorzugsweise 0,1 bis 1,5 Gew.-% der aromastoffhaltigen Teilchen in die Gummimasse eingebracht. Diese Gew.-%-Angaben sind so zu verstehen, dass das fertige Gummibonbon die angegebenen Gew.-%-Anteile an aromastoffhaltigen Teilen enthält. Sehr bevorzugt werden 0,1 bis 1 Gew.-% der aromastoffhaltigen Teilchen in die Gummimasse eingebracht. Diese Konzentration hat sich im Rahmen der Erfindung im Hinblick auf eine gute Verarbeitbarkeit sowie im Hinblick auf einen ausgezeichneten Geschmack des resultierenden Gummibonbons besonders bewährt. - Gegenstand der Erfindung ist auch ein Gummibonbon, in welchem aromastoffhaltige Teilchen separate Aromastoffzonen bilden. Bevorzugt handelt es sich bei den aromstoffhaltigen Teilchen um Feststoffteilchen.

Der Erfindung liegt die Erkenntnis zugrunde, dass mit dem erfindungsgemäßen Verfahren Gummibonbons erhalten werden, die sich durch eine ganz besondere Geschmacksnote auszeichnen. Beim Verzehr eines solchen Gummibonbons schmeckt der Verbraucher neben dem Geschmack der Gummimasse bzw. Gummimatrix eine andere hervortretende Geschmacksrichtung, wenn er beim Lutschen oder Beißen des Gummibonbons auf eine Aromastoffzone bzw. auf ein aromastoffhaltiges Teilchen stößt. Die in dem Gummibonbon verteilten Aromastoffzonen bzw. aromastoffhaltigen Teilchen, vorzugsweise Granulatteilchen, gewährleisten somit mehrere überraschende Geschmackswechsel beim Verzehr des Gummibonbons. Ein erfindungsgemäßes Gummibonbon weist gleichsam ein heterogenes Geschmacksprofil auf. Die heterogene Struktur des Gummibonbons bzw. die Mehrzahl an Aromastoffinseln in der Gummimatrix bedingen ein überraschend angenehmes Geschmackserlebnis. Hierzu trägt die Kombination aus separaten aromastoffhaltigen Teilchen einerseits und aus der besonderen Konsistenz der Gummimatrix andererseits bei. Mit anderen Worten unterstützen die speziellen physikalischen und chemischen Eigenschaften der Gummimatrix von Fruchtgummibonbons, Lakritzbonbons und Schaumzuckerbonbons die erzielte Geschmacksnote auf überraschende Weise. Fernerhin ist hervorzuheben, dass die erfindungsgemäßen aromastoffhaltigen Teilchen sehr einfach und problemlos in die Gummimasse einbringbar sind und die resultierende Gummimasse auch problemlos weiterverarbeitbar ist. Der Erfindung liegt fernerhin die Erkenntnis zugrunde, dass es im Rahmen des erfindungsgemäßen Verfahrens möglich ist, aromastoffhaltige Teilchen in die Gummimasse einzubringen, ohne dass eine Auflösung der Aromastoffe oder eine Diffusion der Aromastoffe in die Gummimatrix stattfindet. Überraschenderweise bleiben beim Einbringen der aromastoffhaltigen Teilchen in die zähflüssige Gummimasse separate Aromainseln erhalten, die im fertigen Gummibonbon das angenehme Geschmackserlebnis bewirken.

Nachfolgend wird ein Ausführungsbeispiel des erfindungsgemäßen Verfahrens zur Herstellung von Fruchtgummibonbons ausführlicher erläutert: Zunächst wird ein Geliermittel, vorzugsweise Gelatine, in Wasser aufgelöst. Parallel dazu wird ein Süßungsmittel, vorzugsweise zumindest eine Zuckerkomponente ebenfalls in Wasser aufgelöst und zu der Lösung eventuell weitere flüssige Komponenten gegeben. Die erhaltene Lösung wird als sogenannte Kochmasse in einer Kochanlage gekocht, beispielsweise bei einer Temperatur von ca. 115° C. Die Geliermittellösung, vorzugsweise Gelatinelösung und die Zuckerlösung werden dann zu der Basismasse zusammengemischt. Dieser Basismasse wird zumindest eine Säure, vorzugsweise Zitronensäurelösung zugefügt. Weiterhin wird der Basismasse zumindest eine Farbkomponente in Form eines Fruchtauszuges und/oder Pflanzenauszuges zugemischt. Im Anschluss daran werden die aromastoffhaltigen Teilchen, vorzugsweise in Granulatform, zugegeben. Die zähflüssige warme Gummimasse wird gerührt und anschließend in der Gießanlage in die einzelnen Gießformen gegossen. Nach dem Abkühlen und Erstarren der Gummimasse werden die einzelnen Gummikörper ausgeformt. In einem fertigen ungefärbten transparenten Fruchtgummibonbon sind mit bloßem Auge eine Mehrzahl von aromastoffhaltigen Teilchen bzw. separaten Aromastoffzonen erkennbar.

Gemäß einem ersten Ausführungsbeispiel werden bei dem oben beschriebenen Verfahren aromastoffhaltige Teilchen in Granulatform eingesetzt, deren aromatisierende Bestandteile naturidentische Aromastoffe und natürliche Aromastoffe sind. Das Granulat enthält fernerhin Maltodextrin und Gummiarabicum sowie 1,05 Gew.-% Maltol, 0,7 Gew.-% Ethylmaltol und Hibiskus-Extrakt. Maltodextrin und Gummiarabicum bilden hier die Trägersubstanz.

Nach einem anderen Ausführungsbeispiel werden bei dem oben beschriebenen Verfahren aromastoffhaltige Teilchen in Granulatform eingesetzt, die als aromatisierende Bestandteile Aromaextrakte und natürliche Aromastoffe enthalten. Fernerhin besteht dieses Granulat aus Maltrodextrin, Gummiarabicum, Ethylalkohol und entmineralisiertem Wasser. Maltodextrin und Gummiarabicum bilden auch hier die Trägersubstanz.

## Patentansprüche

1. Verfahren zur Herstellung von Gummibonbons, wobei in die Gummimasse des Gummibonbons aromastoffhaltige Teilchen mit der Maßgabe eingebracht werden, dass die aromastoffhaltigen Teilchen in dem fertigen Gummibonbon verteilte separate Aromastoffzonen bilden.

2. Verfahren nach Anspruch 1, wobei zur Herstellung der Gummimasse zumindest ein Geliermittel, zumindest ein Süßungsmittel sowie Wasser eingesetzt wird.

3. Verfahren nach einem der Ansprüche 1 oder 2, wobei die Gummimasse in zähflüssiger Form in Gießformen gegossen wird und nach dem Erstarren ausgeformt wird.

4. Verfahren nach Anspruch 3, wobei die aromastoffhaltigen Teilchen vor dem Gießen zu der zähflüssigen Gummimasse gegeben werden.

5. Verfahren nach einem der Ansprüche 1 bis 4, wobei aromastoffhaltige Teilchen aus zumindest einer Trägersubstanz eingesetzt werden, in welche Trägersubstanz zumindest ein Aromastoff eingekapselt wird.

6. Verfahren nach einem der Ansprüche 1 bis 5, wobei mit aromastoffhaltigen Teilchen gearbeitet wird, die einen Durchmesser zwischen 0,4 und 4 mm, vorzugsweise zwischen 0,4 und 3 mm, sehr bevorzugt zwischen 0,4 und 2,5 mm aufweisen.

7. Verfahren nach einem der Ansprüche 1 bis 6, wobei mit zumindest einer Trägersubstanz aus der Gruppe "Maltodextrin, Gummiarabicum, Gelatine, modifizierte Stärke, modifiziertes Molkenprotein" gearbeitet wird.

8. Verfahren nach einem der Ansprüche 1 bis 7, wobei 0,1 bis 2,5 Gew.-%, vorzugsweise 0,1 bis 1,5 Gew.-% der aromastoffhaltigen Teilchen in die Gummimasse eingebracht werden.

9. Gummibonbon mit einer Gummimatrix, in welcher Gummimatrix aromastoffhaltige Teilchen separate Aromastoffzonen bilden.
